# EUROPEAN PATENT APPLICATION

(11) **EP 4 475 384 A1**
(43) Date of publication of application: **11.12.2024**
(21) Application number: 22924931.3
(22) Date of filing: 21.10.2022
(51) Int. Cl.: H02J 7/04, B60L 50/60, B60L 53/14, B60L 58/10, H01M 10/44, H01M 10/48, H02J 7/00, H02J 7/10

(54) **ELECTRIC WORK VEHICLE**

(30) Priority: 03.02.2022 JP 2022015810
(71) Applicant: Kubota Corporation, Osaka 556-8601 (JP)
(72) Inventor: OKAZAKI, Kazuto, Sakai-shi, Osaka 590-0823 (JP); AOKI, Keita, Sakai-shi, Osaka 590-0823 (JP)
(74) Representative: Müller-Boré & Partner Patentanwälte PartG mbB
(86) International application number: PCT/JP2022/039217
(87) International publication number: WO 2023/149026

(57) **Abstract**

An electric work vehicle includes an electric motor M configured to drive a vehicle body to travel, a battery 4 chargeable by an external power supply device KD and configured to supply driving electric power to the electric motor M, a control device 34 configured to control the charge state during charging by the power supply device KD; and an ambient temperature detecting means G configured to detect an ambient temperature. In response to the control device 34 being commanded to perform scheduled charging while it is ready to charge the battery 4, the control device 34 executes scheduled charging control to charge the battery 4 in such a manner that the lower the ambient temperature detected by the ambient temperature detecting means G, the closer the time at which charging is completed is to a planned work start time.

## Description

### Technical Field

The present invention relates to an electric work vehicle including an electric motor configured to drive a vehicle body to travel and a battery for supplying driving electric power to the electric motor.

### Background Art

In an electric work vehicle of this type, when electric power is consumed from a battery, the battery is charged from an external power supply device connected to the battery via a connector for connection, as described in Patent Document 1, for example. Such charging of the battery needs to be done before the start of work.

### Prior Art Document

### Patent Document

Patent Document 1: JP 2020-22296A

### Disclosure of the Invention

### Problem to be Solved by the Invention

When charging the above battery, for example, if the ambient temperature is low, such as in winter, the current value that can be supplied during charging is low, and accordingly, battery charging takes a long time. On the other hand, in summer, the current value that can be supplied during charging is higher, but the battery temperature increases significantly with charging, and thus, when charging is complete, the battery temperature is too high. Consequently, if the electric work vehicle performs work while traveling immediately after charging, the battery temperature may exceed an allowable upper limit temperature, which may cause a problem with the battery. Thus, varying ambient temperatures at different times can lead to a risk of work not being performed well.

Therefore, there is a demand for charging the battery in such a state that it allows work to be performed well without issues, regardless of varying ambient temperatures.

### Means for Solving Problem

An electric work vehicle according to the present invention has a characteristic configuration including: an electric motor configured to drive a vehicle body to travel; a battery chargeable by an external power supply device and configured to supply driving electric power to the electric motor; a connection section to which a power supply connector of the power supply device is connectable; a control device configured to control a charge state during charging by the power supply device; and an ambient temperature detecting means configured to detect an ambient temperature, wherein the control device is configured such that, in response to the control device being commanded to perform scheduled charging while the control device is ready to charge the battery using the power supply device, the control device executes scheduled charging control to charge the battery in such a manner that the lower the ambient temperature detected by the ambient temperature detecting means, the closer a time at which charging is completed is to a planned work start time.

According to the present invention, the control device executes the scheduled charging control before the planned work start time. During the scheduled charging control, the ambient temperature detecting means detects the current ambient temperature, and the lower the detected ambient temperature, the closer the time at which charging is completed is to the planned work start time.

In other words, when the ambient temperature is high, a standby time until the planned work start time is long, and therefore, even when the internal temperature of the battery increases with charging, the internal temperature will decrease over time to a temperature that is suitable for work, thereby avoiding exceeding the allowable upper limit temperature even if a temperature increase is caused by work.

On the other hand, when the ambient temperature is low, the standby time until the planned work start time is short. When the ambient temperature is low, even when the internal temperature of the battery increases with charging, the temperature does not increase to a very high temperature because the temperature at the start of charging is low, and therefore, it is possible to avoid the internal temperature exceeding the allowable upper limit temperature even when work is started immediately after charging.

Accordingly, the battery can be charged in such a state that it allows work to be performed well without issues, irrespective of varying ambient temperatures.

In the present invention, it is preferable that the electric work vehicle includes a temperature sensor configured to detect the temperature of the battery as the ambient temperature detecting means, and the control device is configured to determine the ambient temperature based on a detection result of the temperature sensor and to adjust a charging current applied to the battery based on the detection result of the temperature sensor.

With this configuration, based on the temperature of the battery before charging, whether the ambient temperature at that time is high or low is judged, and therefore, it is easy to properly manage the charge state of the battery based on the actual temperature of the battery during the scheduled charging control.

In the present invention, it is preferable that the electric work vehicle includes an ambient temperature sensor exposed to an outside of the vehicle body as the ambient temperature detecting means.

With this configuration, during the scheduled charging control, the charge state of the battery can be properly managed based on the ambient temperature outside the vehicle body, which affects changes in the battery temperature.

In the present invention, it is preferable that the electric work vehicle includes a timepiece unit having a calendar function and configured to determine the date, and the control device is configured to execute the scheduled charging control such that, in response to the timepiece unit determining that it is winter, charging is completed at a time that is closer to the planned work start time compared to when the timepiece unit determines that it is summer.

With this configuration, instead of directly detecting the temperature, the calendar function is used to execute the scheduled charging control assuming that the ambient temperature is low in winter and high in summer, so that, during the scheduled charge control, the charge state of the battery can be properly managed by a simple configuration without the need to use a temperature sensor or the like.

In the present invention, it is preferable that, during the scheduled charging control, the control device is configured to predict a required time required to complete charging of the battery based on the ambient temperature before start of charging of the battery and charging characteristics of the battery, to set a standby time between a planned charge completion time and the planned work start time such that the lower the ambient temperature, the shorter the standby time, and to start charging of the battery at a time that is earlier than the planned work start time by a total of the required time and the standby time.

When charging a battery, the maximum charging current value that can be supplied varies at different times based on different temperatures at the respective times, and the time required to complete charging also varies accordingly. Charging characteristics that show such correlation between the temperature and the time required for charging are measured and set as map data in advance.

Therefore, with this configuration, during the scheduled charging control, the control device predicts the required time required to complete charging based on the ambient temperature before the start of charging and the charging characteristics of the battery. Furthermore, the control device sets the standby time between the planned charge completion time and the planned work start time such that the lower the ambient temperature, the shorter the standby time. The control device then sets a charge start time such that charging will be completed while leaving the required standby time. In other words, charging of the battery is started at a time that is earlier than the planned work start time by a total of the required time and the standby time.

Starting the charging at an appropriate time in this manner makes it possible for the battery to be fully or nearly fully charged at the planned work start time and also allows work to be performed well in a state in which there is no risk of the allowable upper limit temperature being exceeded even when the work is performed.

### Brief Description of the Drawings

FIG. 1 is a left side view of a tractor.
FIG. 2 is a left side view showing an arrangement of an inverter and the like.
FIG. 3 is a diagram showing a flow of motive power transmission.
FIG. 4 is a block diagram showing a configuration for charging.
FIG. 5 is a flowchart of control operations.
FIG. 6 is a graph showing charging characteristics of a battery.
FIG. 7 is a graph illustrating scheduled charging control operations.
FIG. 8 is another graph illustrating scheduled charging control operations.
FIG. 9 is a block diagram showing a configuration for charging according to another embodiment.
FIG. 10 is a block diagram showing a configuration for charging according to yet another embodiment.

### Best Mode for Carrying out the Invention

An embodiment of the present invention will be described based on the drawings. In the following description, unless otherwise stated, the direction of an arrow F and the direction of an arrow B in the drawings will be respectively referred to as "the front side" and "the rear side", and the direction of an arrow L and the direction of an arrow R in the drawings will be respectively referred to as "the left side" and "the right side". Also, the direction of an arrow U and the direction of an arrow D in the drawings will be respectively referred to as "the upper side" and "the lower side".

### Overall Configuration of Tractor

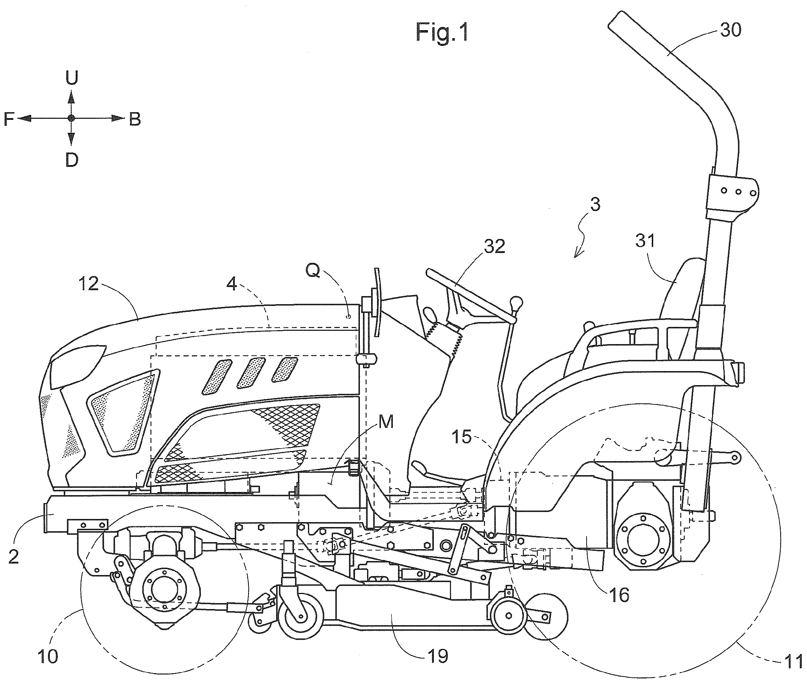

The following describes a tractor as an example of an electric work vehicle according to the present invention. As shown in FIG. 1, the tractor includes left and right front wheels 10, left and right rear wheels 11, and a cover member 12.

The tractor includes a body frame 2 and a driving section 3. The body frame 2 is supported by the left and right front wheels 10 and the left and right rear wheels 11.

The cover member 12 is disposed in a front portion of the body of the tractor. The driving section 3 is behind the cover member 12. In other words, the cover member 12 is in front of the driving section 3.

The driving section 3 includes a protective frame 30, a driver's seat 31, and a steering wheel 32. An operator can sit in the driver's seat 31. Accordingly, the operator can get on the driving section 3. The operator steers the left and right front wheels 10 by operating the steering wheel 32. The operator can perform various driving operations in the driving section 3.

The tractor includes a battery 4 for traveling. The cover member 12 is configured to be pivotable about an opening and closing axis Q extending in the left-right direction of the body. Accordingly, the cover member 12 is configured to be openable and closable. When the cover member 12 is closed, the battery 4 for traveling is covered by the cover member 12.

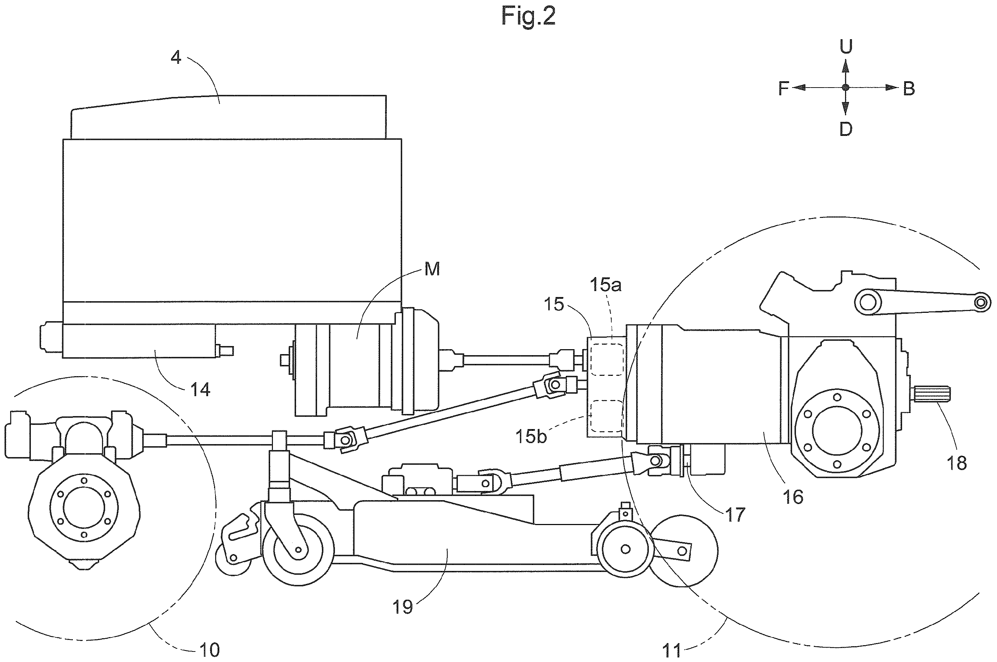

As shown in FIG. 2, the tractor includes an inverter 14 and an electric motor M. The battery 4 for traveling supplies electric power to the inverter 14. The inverter 14 converts DC power supplied from the battery 4 for traveling to AC power, and supplies the AC power to the electric motor M. The electric motor M is driven by the AC power supplied from the inverter 14.

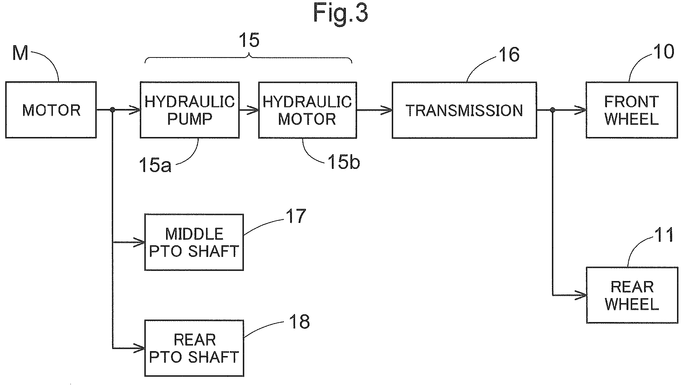

As shown in FIGS. 2 and 3, the tractor includes a hydraulic continuously variable transmission 15 and a transmission 16. As shown in FIG. 3, the hydraulic continuously variable transmission 15 includes a hydraulic pump 15a and a hydraulic motor 15b.

The hydraulic pump 15a is driven by rotational motive power transmitted from the electric motor M. As a result of the hydraulic pump 15a being driven, rotational motive power is output from the hydraulic motor 15b. The hydraulic continuously variable transmission 15 is configured to change the speed of rotational motive power between the hydraulic pump 15a and the hydraulic motor 15b. Also, the hydraulic continuously variable transmission 15 is configured to be capable of changing the transmission ratio in a stepless manner.

The rotational motive power output from the hydraulic motor 15b is transmitted to the transmission 16. The speed of the rotational motive power transmitted to the transmission 16 is changed by a gear transmission mechanism included in the transmission 16, and the rotational motive power is distributed to the left and right front wheels 10 and the left and right rear wheels 11. Thus, the left and right front wheels 10 and the left and right rear wheels 11 are driven.

As shown in FIGS. 2 and 3, the tractor also includes a middle PTO shaft 17 and a rear PTO shaft 18. Rotational motive power output from the electric motor M is distributed to the hydraulic pump 15a, the middle PTO shaft 17, and the rear PTO shaft 18. The middle PTO shaft 17 and the rear PTO shaft 18 are rotated by the distributed rotational motive power.

If a work device is connected to the middle PTO shaft 17 or the rear PTO shaft 18, the work device is driven by rotational motive power transmitted by the middle PTO shaft 17 or the rear PTO shaft 18. For example, in the present embodiment, a grass cutting device 19 is connected to the middle PTO shaft 17 as shown in FIG. 2. The grass cutting device 19 is driven by rotational motive power transmitted by the middle PTO shaft 17.

### Configuration Related to Motor Control

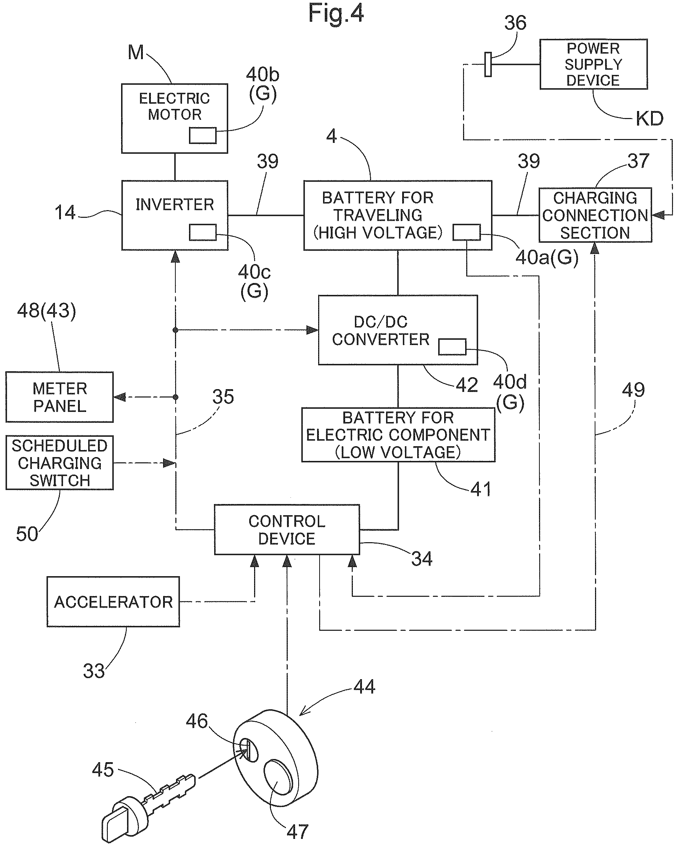

As shown in FIG. 4, a configuration related to the control of the electric motor M includes an accelerator 33, a control device 34 configured to control the operation of the electric motor M, and the inverter 14. The accelerator 33 is in the vicinity of the steering wheel 32. Although not shown, the accelerator 33 includes a pivotable lever and a potentiometer configured to be operated by pivoting the lever. The accelerator 33 is connected to the control device 34. The control device 34 is connected to the inverter 14 via a signal harness 35. The control device 34 is configured to issue a command to the inverter 14 in response to a command from the accelerator 33. The inverter 14 is configured to control the output of the electric motor M by adjusting electric power supplied to the electric motor M from the battery 4 for traveling, according to the command from the control device 34.

### Configuration Related to Charging

As shown in FIG. 4, the battery 4 for traveling is chargeable by an external power supply device KD. The tractor includes a charging connection section 37 to which a power supply connector 36 of the power supply device KD is connectable. The charging connection section 37 is inside the cover member 12 and is configured to be exposed to the outside when the cover member 12 is pivoted open. The control device 34 is configured to control the operation of the electric motor M and to control the charge state during charging by the power supply device KD.

The power supply connector 36 of the power supply device KD is connectable to the charging connection section 37. The charging connection section 37 is in conformity with commonly used standard specifications. The battery 4 for traveling is charged via an electric power supply line 39 while the power supply connector 36 is connected to the charging connection section 37. The battery 4 for traveling supplies high-voltage (e.g., several tens to several hundreds of volts) electric power to the inverter 14 and the electric motor M for traveling via the electric power supply line 39.

The battery 4 for traveling uses, for example, a lithium ion battery and has a configuration in which a large number of small-sized low-voltage unit cells, which are not shown, are stacked, and the exterior of the stack is enclosed in a housing in a sealed state. Therefore, heat is likely to be trapped in the battery, and once the internal temperature of the battery increases, the temperature is unlikely to decrease. To address this issue, the battery for traveling includes a temperature sensor 40 (40a) configured to detect the internal temperature of this battery. Information detected by the temperature sensor 40 (40a) is input to the control device 34.

In addition to the battery 4 for traveling, the tractor includes a battery 41 for electric components for supplying electric power to the control device 34 and other electric components. The battery 41 for electric components supplies low-voltage (12 V) electric power in order to drive the electric components. The battery 41 for electric components is charged using electric power supplied from the battery 4 for traveling via a DC/DC converter 42. The electric motor M, the inverter 14, and the DC/DC converter 42 may also be provided with temperature sensors 40 (40b, 40c, and 40d).
An operation panel 43 in the driving section 3 includes a switching operation unit 44 serving as a start command means capable of switching the control device 34 between an operable state and an inactive state. The switching operation unit 44 is provided below the steering wheel 32 on the operation panel 43. The switching operation unit 44 includes an insertion slot 46 as a securing portion where a portable operation key 45 can be inserted and secured, and a manually-pressable push-button switch 47. The control device 34 can be switched from the inactive state to the operable state by the switch 47 being pressed while the operation key 45 is inserted and secured in the insertion slot 46.

The operation panel 43 includes a meter panel 48 configured to display, for example, traveling conditions of the vehicle body, working conditions, battery information (amount of charge and temperature), and the like. The meter panel 48 is connected the control device 34, and the control device 34 controls the operation of the meter panel 48.

The control device 34, the inverter 14, the battery 4 for traveling (including the temperature sensor 40a), the DC/DC converter 42, the meter panel 48, the charging connection section 37, and the like are connected via the CAN (Controller Area Network) type signal harness 35 so as to communicate data. The control device 34 communicates with the charging connection section 37 via a charging communication harness 49, and information on whether or not the power supply connector 36 is connected to the charging connection section 37, information on a charging current required by the work vehicle, and the like are transmitted therebetween. The charging connection section 37 and the power supply device KD are also configured such that signals can be communicated therebetween. Furthermore, information on the operation performed on the switching operation unit 44 is input to the control device 34.

### Control for Charging

Once the power supply connector 36 is connected to the charging connection section 37 while the control device 34 is in the operable state, the control device 34 is ready to charge the battery 4 for traveling using the power supply device KD.

During charging of the battery 4 for traveling, the control device 34 is configured to adjust the charging current based on the detection results of the temperature sensor 40. More specifically, in the battery 4 for traveling, the relationship between the state of charge (SOC) of the battery 4 for traveling and the maximum allowable value of the charging current depends on the temperature of the battery 4 for traveling. Therefore, during charging, the current value needs to be changed and adjusted based on changes in the internal temperature and the state of charge so as not to exceed the aforementioned maximum allowable current value.

The control device 34 is configured such that, when the control device 34 is commanded to perform scheduled charging while it is ready to charge the battery 4 for traveling using the power supply device KD, the control device 34 executes scheduled charging control to charge the battery 4 for traveling based on the detection results of the temperature sensor 40 in such a manner that the lower the detected ambient temperature, the closer the time at which charging is completed is to a planned work start time. That is to say, in this embodiment, the temperature sensor 40 functions as an ambient temperature detecting means G.

The operation panel 43 includes a manually-operable scheduled charging switch 50 (see FIG. 4), and the operator can command scheduled charging by operating the scheduled charging switch 50.

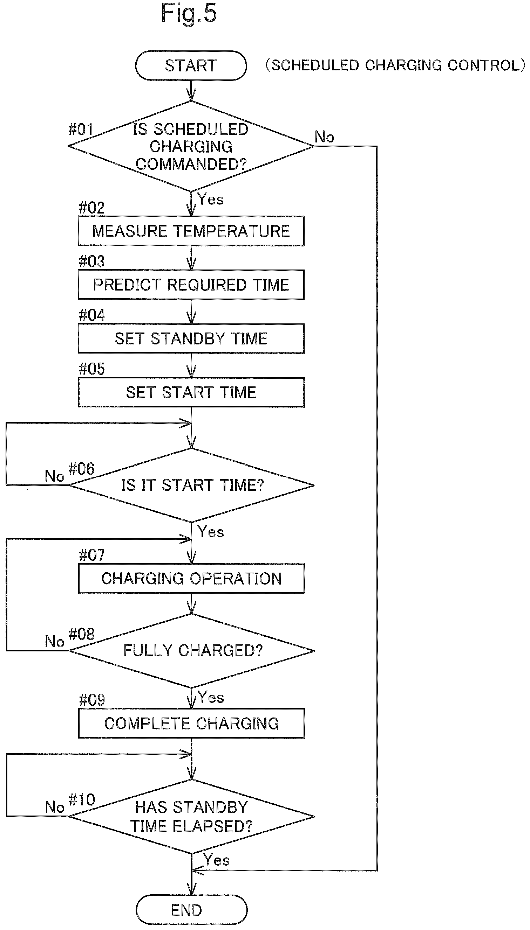

Hereinafter, scheduled charging control performed by the control device 34 will be described with reference to the flowchart in FIG. 5.

When charging is ready, with the power supply connector 36 connected to the charging connection section 37 while the control device 34 is in the operable state, if scheduled charging is commanded by operating the scheduled charging switch 50 (step #01), the ambient temperature at that time is measured based on the detection results of the temperature sensor 40 (step #02).

If it is immediately after the tractor has performed work while traveling in an agricultural field or the like, the internal temperature of the battery 4 for traveling does not correspond to the ambient temperature because the internal temperature has increased due to heat generated by current applied to the battery 4 for traveling, but then, after some time has elapsed and the increased internal temperature due to the current applied to the battery 4 for traveling has decreased, the internal temperature corresponds to the ambient temperature. Therefore, the ambient temperature can be estimated based on the detection results of the temperature sensor 40.

Next, the time required to complete charging is predicted based on the ambient temperature and the charging characteristics of the battery 4 for traveling (step #03).

This will be described in further detail. Various characteristics of the battery 4 for traveling related to charging, for example, various characteristics that change according to different temperatures of the battery 4 for traveling as described above, such as the correlation between the state of charge (SOC) and the maximum allowable charging current value and the correlation between the charging current and the temperature increase caused by charging, have been measured and known in advance.

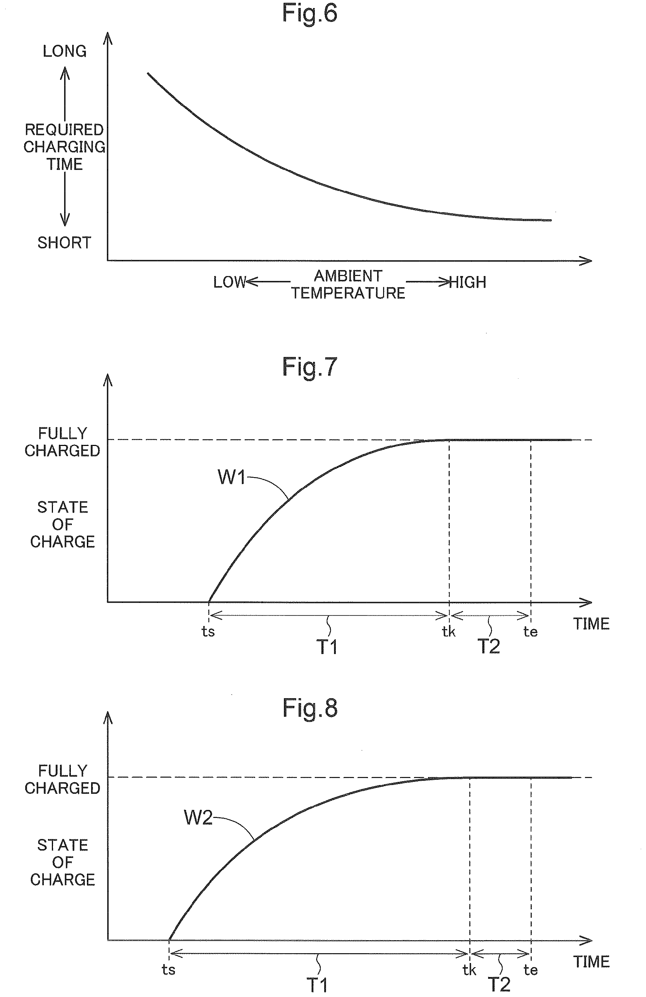

Therefore, with these data, the correlation between the ambient temperature and the time required to charge the battery to a fully charged state can be obtained and stored as map data in advance as shown in FIG. 6, for example, or can be obtained using an arithmetic formula or the like. Accordingly, a required time T1 (see FIGS. 7 and 8) until a planned charge completion time tk at which charging will be completed can be predicted based on the ambient temperature.

Next, a standby time T2 (see FIGS 7 and 8) between the planned charge completion time tk and a planned work start time te is set such that the lower the ambient temperature, the shorter the standby time T2 (step #04). For example, when the ambient temperature is low, such as in winter, the temperature of the battery 4 for traveling does not increase to a very high temperature even if the battery is charged to a fully charged state, and therefore, there is no risk of the temperature reaching the allowable upper limit temperature even if the tractor performs work while traveling immediately thereafter. On the other hand, when the ambient temperature is high, such as in summer, the temperature of the battery 4 for traveling is high after charging to a fully charged state, and there is a risk of the temperature of the battery 4 for traveling reaching the allowable upper limit temperature if the tractor performs work while traveling immediately thereafter. Therefore, when the ambient temperature is high, the standby time T2 between the completion of charging and the start of work is set to be long as indicated by the line W1 in FIG. 7, and when the ambient temperature is low, the standby time T2 is set to be short as indicated by the line W2 in FIG. 8.

Then, the time that is earlier than the planned work start time te by a total of the required time T 1 and the standby time T2 is set as a planned charge start time ts (step #05). Note that the planned work start time te is preset by the operator.

At the planned charge start time ts, necessary information is transmitted to the power supply device KD via the charging communication harness 49 so as to enable the power supply device KD to supply electric power, and a charging operation for charging the battery 4 for traveling using the power supply device KD is performed (steps #06 and #07). When the battery 4 for traveling is charged to a preset charge state and is thus fully charged, charging is stopped (steps #08 and #09).

When the planned work start time te is reached after a lapse of the set standby time T2 from the termination of charging (step #10), the scheduled charging process is ended, and the operator then performs driving operations. If the operator performs an operation for starting work when the standby time T2 has not elapsed and the planned work start time te has not yet been reached, the meter panel may display a notification to the effect that there is a risk of an increase in temperature of the battery 4 for traveling.
Although the temperature sensor 40a of the battery 4 for traveling is used as an example here, the temperature sensor 40b of the electric motor M, the temperature sensor 40c of the inverter 14, or the temperature sensor 40d of the DC/DC converter 42 may also be used as the temperature sensor 40 serving as the ambient temperature detecting means G. When any of these three temperature sensors 40 is used, accuracy is slightly lower than when the temperature sensor 40a of the battery 4 for traveling is used for measurement, but there are often no problems in practical use, and thus, these temperature sensors may be used.

### Other Embodiments

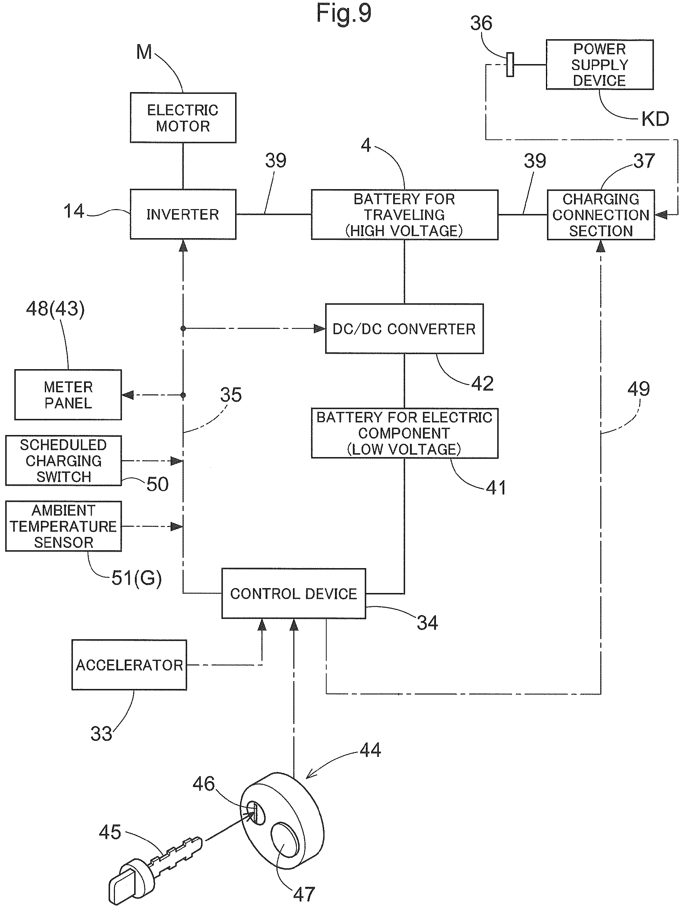

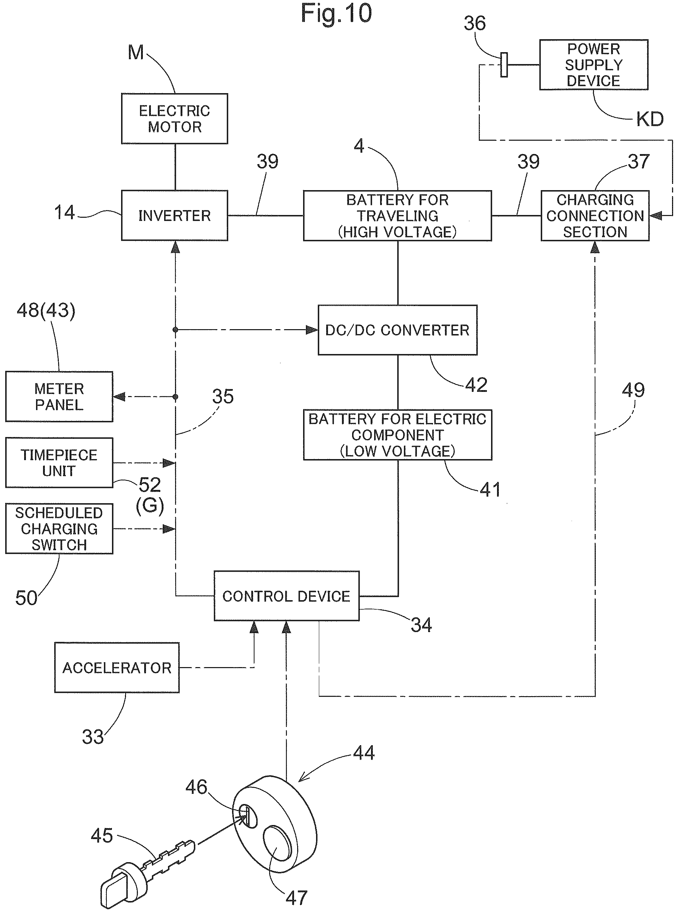

(1) Instead of the temperature sensor 40 configured to detect the internal temperature of the battery 4 for traveling, an ambient temperature sensor 51 exposed to the outside of the vehicle body may be provided as the ambient temperature detecting means G, as shown in FIG. 9, and the scheduled charging control may be executed based on information detected by the ambient temperature sensor 51.
(2) Instead of the temperature sensor 40 configured to detect the internal temperature of the battery 4 for traveling, a timepiece unit 52 having a calendar function and capable of determining which date is the current date may be provided as the ambient temperature detecting means G, as shown in FIG. 10. Furthermore, the control device 34 may be configured to execute the scheduled charging control such that, when the timepiece unit 52 determines that it is winter, charging is completed at a time that is closer to the planned work start time compared to when the timepiece unit 52 determines that it is summer.
   In other words, the standby time T2 may be set as follows by using the calendar function, rather than by measuring the ambient temperature, the battery temperature, or the like: if it is winter, the standby time T2 is set to be somewhat short assuming that the ambient temperature is somewhat low; if it is summer, the standby time T2 is set to be somewhat long assuming that the ambient temperature is somewhat high; and if it is spring or autumn, the standby time T2 is set to an intermediate length assuming that the ambient temperature is an intermediate temperature.
(3) A configuration may also be adopted in which, during the scheduled charging control, the required time T1 and the standby time T2 as described above are not set, but values the total of the required time and the standby time at varying ambient temperatures are measured by experiments or the like in advance, and, for example, the correlation between the ambient temperature and the total time is stored as map data, or the total time is calculated from the ambient temperature.
(4) In the above-described embodiments, a configuration in which the exterior of the battery 4 for traveling is covered by a housing in a sealed state has been described, but instead of this configuration, a battery of an open exterior design may be used.
(5) In each of the above-described embodiments, the present invention is applicable not only to an electric tractor but also to electric agricultural vehicles including an electric combine harvester and an electric rice transplanter, electric work vehicles for performing various types of work, and the like.

### Industrial Applicability

The present invention is applicable to electric work vehicles for performing various types of work such as agricultural work.

### Description of Reference Signs

4: Battery
34: Control device
40: Temperature sensor
51: Ambient temperature sensor
52: Timepiece unit
G: Ambient temperature detecting means
M: Electric motor
T1: Required time
T2: Standby time
te: Planned work start time
tk: Planned charge completion time

## Claims

1. An electric work vehicle comprising:
an electric motor configured to drive a vehicle body to travel;
a battery chargeable by an external power supply device and configured to supply driving electric power to the electric motor;
a connection section to which a power supply connector of the power supply device is connectable;
a control device configured to control a charge state during charging by the power supply device; and
an ambient temperature detecting means configured to detect an ambient temperature,
wherein the control device is configured such that, in response to the control device being commanded to perform scheduled charging while the control device is ready to charge the battery using the power supply device, the control device executes scheduled charging control to charge the battery in such a manner that the lower the ambient temperature detected by the ambient temperature detecting means, the closer a time at which charging is completed is to a planned work start time.

2. The electric work vehicle according to claim 1, comprising:
a temperature sensor configured to detect a temperature of the battery as the ambient temperature detecting means,
wherein the control device is configured to determine the ambient temperature based on a detection result of the temperature sensor and to adjust a charging current applied to the battery based on the detection result of the temperature sensor.

3. The electric work vehicle according to claim 1, comprising:
an ambient temperature sensor exposed to an outside of the vehicle body as the ambient temperature detecting means.

4. The electric work vehicle according to claim 1, comprising:
a timepiece unit having a calendar function and configured to determine which date is current date,
wherein the control device is configured to execute the scheduled charging control such that, in response to the timepiece unit determining that it is winter, charging is completed at a time that is closer to the planned work start time compared to when the timepiece unit determines that it is summer.

5. The electric work vehicle according to any one of claims 1 to 4,
wherein, during the scheduled charging control, the control device is configured to predict a required time required to complete charging of the battery based on the ambient temperature before start of charging of the battery and charging characteristics of the battery, to set a standby time between a planned charge completion time and the planned work start time such that the lower the ambient temperature, the shorter the standby time, and to start charging of the battery at a time that is earlier than the planned work start time by a total of the required time and the standby time.
